# EUROPÄISCHE PATENTSCHRIFT

(11) **EP 2 005 820 B1**
(45) Veröffentlichungstag und Bekanntmachung des Hinweises auf die Patenterteilung: **25.04.2012**
(21) Anmeldenummer: 08156548.3
(22) Anmeldetag: 20.05.2008
(51) Int. Cl.: E06B 11/08, E05B 65/00, A01K 1/00, A01K 1/02

(54) **Tür, wie insbesondere Eingangstür einer Selbstfangbox für Tiere**
Door, such as in particular entry door of a self-capture box for animals
Porte, comme en particulier une porte d'entrée d'une boîte de ramassage automatique pour animaux

(30) Priorität: 23.06.2007 DE 202007008793 U
(43) Veröffentlichungstag der Anmeldung: 24.12.2008
(73) Patentinhaber: B. Mannebeck Landtechnik GmbH, 48465 Schüttorf (DE)
(72) Erfinder: Mannebeck, Bernhard, 48465 Quendorf (DE)
(74) Vertreter: Linnemann, Winfried

(56) Entgegenhaltungen:
- AT-U1- 6 930
- NL-C1- 1 007 632
- US-A- 1 390 725
- US-B1- 7 021 678

## Beschreibung

Die Erfindung betrifft eine Tür, wie insbesondere Eingangstür einer Selbstfangbox für Tiere, wobei die Tür verschwenkbar ist und eine Verriegelungsvorrichtung aufweist. Weiter betrifft die Erfindung eine Selbstfangbox und eine Anordnung von mehreren Selbstfangboxen.

Selbstfangboxen und Fressboxen für Tiere, wie insbesondere für Schweine, sind im Stand der Technik bekannt. So sind Schweine, die für die Zucht verwendet werden, in Gruppen zu halten. Während des Fressens müssen die Tiere jedoch getrennt werden, um Auseinandersetzungen um das Futter wegen des bei Schweinen besonders stark ausgeprägten Futterneids zu vermeiden. So kann es im Falle, dass sich die Schweine um das Futter streiten, zu ernsthaften Verletzungen durch Bisse kommen. Daher verwendet man in dieser Haltungsform z.B. die Selbstfang-Fressbox. Bei dieser Art von Fressboxen sind die Tiere während des Fressens einzeln eingesperrt. Sie müssen sich aber auch selbst aus den Boxen befreien können. Daher sind im Stand der Technik verschiedene Formen solcher Selbstfang-Fressboxen bekannt geworden.

In der NL 1 007 632 C1 wird eine Selbstfangbox der eingangs genannten Art beschrieben, wobei eine nach innen oder nach außen schwenkbare Drehtür mit einer selbsttätig verriegelbaren und fernbetätigt entriegelbaren, mechanischen Schließvorrichtung versehen ist, die drei verschiedene Betriebszustände bzw. Zugangsregeln ermöglicht. In einer ersten Stellung der Verriegelung kann die Drehtür sowohl in Eintritts- wie auch in Austrittsrichtung frei schwenken, während sie in einer anderen Verriegelungsstellung aus beiden Richtungen kommend selbsttätig in der Neutralstellung vollständig blockiert wird. In einer dritten Betriebsstellung bleibt das Schwenken der Tür aus der Neutralstellung heraus in Eintrittsrichtung möglich, wobei die Tür nach einem Eintritt von Tieren in die Box selbsttätig in die Neutralstellung zurückkehrt und dort in Austrittsrichtung selbsttätig blockiert wird. In der Box gefangene Tiere können die Box also erst nach einem fernbetätigten Entriegelungsvorgang wieder verlassen. Die Eintrittsrichtung der Tür bleibt jedoch auch bei blockiertem Austritt frei schwenkbar und so können weitere Tiere in die Box drängen, was für eine Fressbox in einer Gruppenhaltung von Schweinen ein unerwünschter Zustand ist. Hier soll der Zutritt weiterer Tiere in eine besetzte Fressbox unbedingt verhindert werden und ein in der Fressbox befindliches Tier soll diese selbstständig wieder verlassen können. Erst danach soll die entsprechende Fressbox wieder für den Eintritt eines weiteren Tieres frei sein. Dieser Betriebszustand ist mit einer Vorrichtung, wie sie in der NL 1 007 632 C1 beschrieben ist, allerdings nicht erreichbar, denn ein freier, von einem Tier ausgelöster Wechselzutritt, d. h. Eintritt, Austritt und erneuter Eintritt, ist nicht möglich, weil ein Wechsel der blockierten Richtung nur über eine Einstellung der Vorrichtung von außen vorgenommen werden kann.

Hierzu zeigt die US 1,390,725 A zwar eine Möglichkeit, den Eintritt in einen zellenartigen Raum selbsttätig zu blockieren, wenn dieser Raum durch ein Individuum besetzt ist. Hierbei wird die Blockierung gegen einen Eintritt eines weiteren Individuums jedoch nicht mechanisch vorgenommen, sondern die Bewegung der Tür wird durch die Anwesenheit des Individuums im Raum verhindert, was bei einem kräftigen Zutrittsversuch von außen durchaus zu Verletzungen bei dem Individuum im Innenraum führen kann. Zudem besitzt diese Lösung keinerlei Möglichkeit für eine Selbstfangfunktion mit freiem Eintritt und blockiertem Austritt.

Die DE 36 20 245 A1 offenbart eine Selbstfang-Fressbox, die eine Wippe aufweist zum Freigeben bzw. Absperren der Fressbox, wobei ein Arm der Wippe bei Betreten der Fressbox nach oben gekippt wird und damit gleichzeitig durch Absenken des anderen Arms der Wippe der Eingang versperrt wird, damit keine nachfolgenden Tiere in die Box gelangen können. Nach dem Fressen kann das Tier die Box durch einen separaten Ausgang verlassen, wobei dadurch ein Entriegelungsmechanismus mittels einer Platte und einer Kette betätigt wird und dies zum eingangsseitigen Öffnen der Fressbox führt.

Die DE 36 15 297 A1 offenbart eine Fressbox für Tiere, die ebenfalls eine Wippe zum Freigeben bzw. Absperren der Fressbox aufweist, wobei ein Arm der Wippe bei Betreten der Fressbox ebenfalls nach oben gekippt wird und durch ein Absenken des anderen Arms der Wippe gleichzeitig der Eingang versperrt wird, damit keine nachfolgenden Tiere in die Box gelangen können. Nach dem Fressen kann das Tier wiederum die Box durch einen separaten Ausgang verlassen, wobei beim Verlassen der Box ein Entriegelungsmechanismus mittels einer Schubstange betätigt wird, was zum eingangsseitigen Öffnen der Fressbox führt.

Die DE 88 15 320 U offenbart eine Fressbox, bei welcher ein dreiflügeliges Rad vorgesehen ist, das zur Freigabe bzw. Beschränkung des Zugangs zu der Box vorgesehen ist. Beim Verlassen des Trogbereichs der Box wird ein Verriegelungsmechanismus gelöst, der im verriegelten Zustand den Zutritt der Box verhindert, und ein nachfolgendes Tier kann die Fressbox wieder betreten.

Die DE 30 24 692 A1 und die DE 87 16 831 U offenbaren jeweils elektrisch oder elektronisch gesteuerte und elektrisch oder mittels Druckmedium betätigte Gatter oder Klappen von Fressboxen oder Trögen.

Einige der im Stand der Technik bekannten, vorstehend kurz beschriebenen Selbstfangboxen oder Fressboxen haben den Nachteil, dass sie fremdgesteuert und fremdkraftbetätigt sind, wie elektrisch oder per Druckmittel betätigt, so dass diesbezüglich ein erheblicher technischer Aufwand zur Steuerung und sicheren und zuverlässigen Betätigung betrieben werden muss. Diese Systeme haben sich darüber hinaus nicht nur als aufwändig und teuer herausgestellt, sondern sind auch anfällig für Ausfälle, so dass z.B. bei Störung der Stromversorgung gegebenenfalls die gesamte Anlage von Selbstfangboxen außer Betrieb geraten kann. Dies würde dazu führen, dass entweder die Tiere kein Futter bekommen oder zumindest einzelne Tiere länger eingesperrt sein könnten. Andere bekannte Systeme sehen mechanisch sehr aufwändige Konstruktionen mit Wippen oder Flügelrädern und diesbezüglichen Ver- und Entriegelungsmechanismen vor. Diese Systeme sind auch sehr aufwändig und kostenintensiv und stellen sich in der Praxis auch als anfällig und wartungsintensiv heraus.

Es ist die Aufgabe der vorliegenden Erfindung, eine Tür, wie insbesondere Eingangstür einer Selbstfangbox für Tiere, eine Selbstfangbox und eine Anordnung von Selbstfangboxen zu schaffen, bei denen die Zugangsregeln durch Selbstfangtüren ausgeführt werden, die jeweils robust und einfach aufgebaut sind und im täglichen Betrieb zuverlässig sind.

Erfindungsgemäß wird die Aufgabe bezüglich der Tür gelöst mit den Merkmalen von Anspruch 1. Demgemäß sieht die erfindungsgemäße Lösung eine Tür vor, welche mit Scharnieren an einem Türpfosten, z.B. an einem seitlichen Wandelement, angebracht ist, wobei die Tür eine Verriegelungsvorrichtung aufweist, welche einen in einem Riegellager bewegbar gehaltenen Fangriegel und eine Sperre aufweist, welche den Fangriegel auf einer Sperrplatte festhält, und wobei an der verschwenkbaren Tür eine Kulisse und ein Mitnehmernocken vorgesehen ist, welcher bei Verdrehung bzw. Öffnung der Tür die Sperre verlagert, so dass die Sperrplatte der Sperre den Fangriegel freigibt und der Fangriegel bei Rückschwenken der Tür in eine Ausnehmung der Kulisse zur Verriegelung der Tür eintauchen kann. Die Ausnehmung der Kulisse ist dabei mit mindestens einer Auflaufschräge in Richtung Ausgang für den Fangriegel versehen, wodurch ermöglicht wird, die Verriegelung des Fangriegels in der Ausnehmung der Kulisse in Richtung Ausgang zu überwinden.

Dabei ist es besonders vorteilhaft, wenn die Verriegelungsvorrichtung im Bereich eines Scharniers der Tür angeordnet ist. Dies hat den Vorteil, dass keine aufwändige Mechanik mit langen Wegen benötigt wird, welche nur störungsanfällig wäre. Die erfindungsgemäße Lösung sieht somit die Verriegelungsvorrichtung als besonders kompakte Einheit vor.

Auch ist es vorteilhaft, wenn der Fangriegel mittels eines Einstellmittels, wie eines Seils, einer Kette oder eines Gestänges, auf die Sperrplatte aufsetzbar ist oder von ihr abhebbar ist. Dadurch kann extern gesteuert werden, ob und wann die Verriegelung aktiviert werden soll bzw. mit welchen Zugangsregeln die Tür betrieben werden soll. Auch ist es besonders zweckmäßig, wenn die Verriegelung durch ein Anheben des Fangriegels mittels des Einstellmittels vollständig wieder aufhebbar ist.

Vorteilhafte Weiterbildungen der erfindungsgemäßen Tür sind in den Unteransprüchen beschrieben.

Erfindungsgemäß wird die Aufgabe bezüglich der Selbstfangbox gelöst mit den Merkmalen von Anspruch 13. Demgemäß sieht die erfindungsgemäße Lösung eine Selbstfangbox vor, die mit zumindest einem seitlichen Wandelement versehen ist und mit zumindest einer Tür, wie insbesondere einer Selbstfangtür, wobei die Tür eine Verriegelungsvorrichtung aufweist, welche einen in einem Riegellager bewegbar gehaltenen Fangriegel und eine Sperre aufweist, welche den Fangriegel auf einer Sperrplatte festhält, und wobei an der verschwenkbaren Tür eine Kulisse und ein Mitnehmernocken vorgesehen ist, welcher bei Verdrehung bzw. Öffnung der Tür die Sperre verlagert, so dass die Sperrplatte der Sperre den Fangriegel freigibt und der Fangriegel bei Rückschwenken der Tür in eine Ausnehmung der Kulisse zur Verriegelung der Tür eintauchen kann. Die Ausnehmung der Kulisse ist dabei mit mindestens einer Auflaufschräge in Richtung Ausgang für den Fangriegel versehen, wodurch ermöglicht wird, die Verriegelung des Fangriegels in der Ausnehmung der Kulisse in Richtung Ausgang zu überwinden.

Dabei ist es vorteilhaft, wenn die Verriegelungsvorrichtung im Bereich eines Scharniers der Tür angeordnet ist.

Auch ist es vorteilhaft, wenn der Fangriegel mittels eines Einstellmittels, wie eines Seils, einer Kette oder eines Gestänges, auf die Sperrplatte aufsetzbar ist oder von ihr abhebbar ist. Dadurch kann extern gesteuert werden, ob und wann die Verriegelung aktiviert werden soll bzw. mit welchen Zugangsregeln die Tür betrieben werden soll. Auch ist es besonders zweckmäßig, wenn die Verriegelung durch ein Anheben des Fangriegels mittels des Einstellmittels vollständig wieder aufhebbar ist.

Die Lösung der erfindungsgemäßen Aufgabe bezüglich der Anordnung mehrerer Fangboxen wird erreicht mit einer Anordnung gemäß Anspruch 14, wonach eine Anordnung von einer Mehrzahl von Selbstfangboxen derart ausgebildet ist, dass die Einstellmittel zumindest einzelner oder aller Selbstfangboxen koppelbar und/oder entkoppelbar sind und zumindest teilweise gemeinsam betätigbar sind.

Dabei ist es besonders vorteilhaft, wenn die Einstellmittel einzelner oder aller Selbstfangboxen in beliebiger Kombination koppelbar und/oder entkoppelbar sind und diese Kombinationen individuell betätigbar sind. Dadurch kann erreicht werden, dass die Auswahl der Selbstfangboxen zum Verriegeln und Entriegeln bzw. für die Auswahl der Zugangsregeln jeweils nach den Anforderungen wählbar ist.

Nachstehend wird ein Ausführungsbeispiel der Erfindung anhand einer Zeichnung näher erläutert. Es zeigen:
- Fig. 1: eine schematische Darstellung eines Abschnitts einer Anordnung von mehreren Selbstfangboxen, von oben betrachtet;
- Fig. 2: eine schematische Darstellung der Verriegelungsvorrichtung in einem Zustand des ungeregelten Zutritts durch die Eingangstür der Selbst- fangbox;
- Fig. 3: eine schematische Detaildarstellung der Verriegelungsvorrichtung in einem Zustand des ungeregelten Zutritts durch die Eingangstür, in der Draufsicht;
- Fig. 4: eine Darstellung der Verriegelungsvorrichtung im Zustand der Aus- gangsstellung für die Zugangsregel eines freien Wechselzutritts,
- Fig. 5: eine Darstellung der Verriegelungsvorrichtung im Zustand des Eintritts eines Tieres für die Zugangsregel des freien Wechselzutritts,
- Fig. 6: eine schematische Detaildarstellung der Verriegelungsvorrichtung in der Draufsicht im Zustand des Eintritts eines Tieres für die Zugangsre- gel des freien Wechselzutritts,

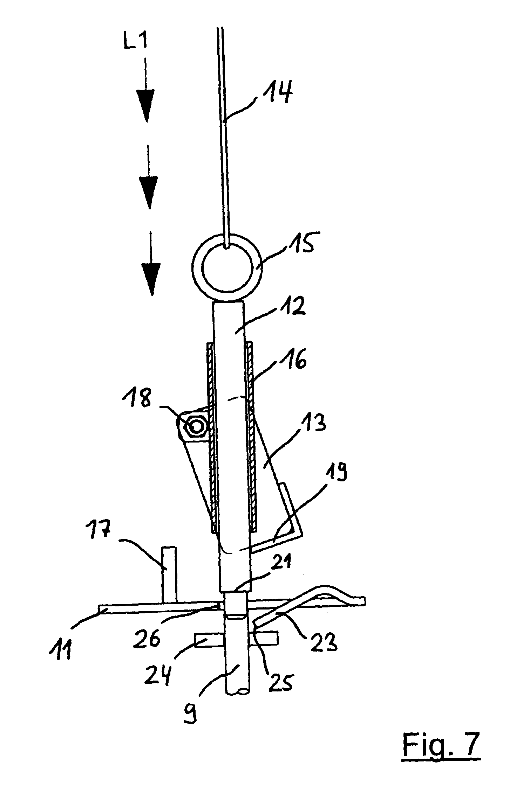

- Fig. 7: eine Darstellung der Verriegelungsvorrichtung im Zustand der Bele- gung der Box durch ein Tier für die Zugangsregel des freien Wechsel- zutritts, wobei die Eintrittschwenkrichtung der Tür für ein weiteres Tier gesperrt ist,
- Fig. 8: eine Darstellung der Verriegelungsvorrichtung für die Zugangsregel des Einzelzutritts im Zustand des Austritts eines Tieres aus der Box,
- Fig. 9: eine Darstellung der Verriegelungsvorrichtung für die Zugangsregel des Wechselzutritts im Zustand des Austritts eines Tieres aus der Box,
- Fig. 10: eine Detaildarstellung der Verriegelungsvorrichtung in der Draufsicht für die Zugangsregel des Wechselzutritts im Zustand des Austritts ei- nes Tieres aus der Box,
- Fig. 11: eine Darstellung der Verriegelungsvorrichtung der Eingangstür der Selbstfangbox für die Zugangsregel der Zutrittsperre, und
- Fig. 12: eine Darstellung der Verriegelungsvorrichtung der Eingangstür der Selbstfangbox für die Zugangsregel des ungeregelten Zugangs mit verschiebbaren oder entfernbaren Auflaufschrägen zur Umschaltung der Zugangsregeln zwischen Einzelzutritt und Wechselzutritt.

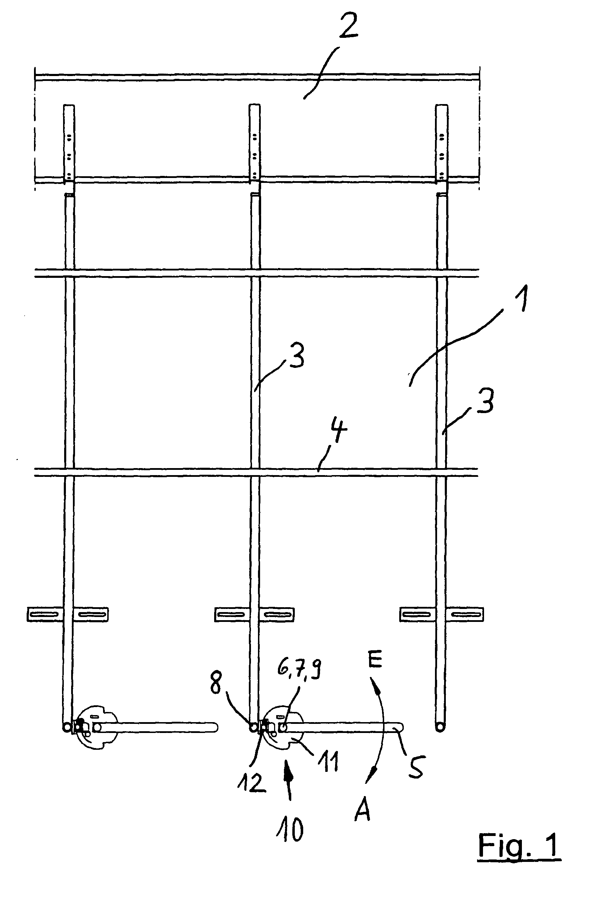

Die Figur 1 zeigt schematisch ein Ausführungsbeispiel eines Abschnitts von mehreren Selbstfangboxen in der Draufsicht. Die Selbstfangbox 1 weist seitlich angeordnete Wandelemente 3 auf, die vorzugsweise gitterartig als Trennwand aufgebaut und angeordnet sind. Alternativ kann aber auch bei einer einzelnen Selbstfangbox an einer gebäudeseitigen Wand nur eine weitere gitterartige Trennwand vorgesehen sein. Zwischen zwei Wandelementen 3 ist zur Stabilisierung zumindest eine Querstrebe 4 vorgesehen, die mit den beiden benachbarten Wandelementen 3 verbunden ist. Am Ende der Selbstfangbox kann bei einer Verwendung als Fressbox ein Futtertrog 2 vorgesehen sein.

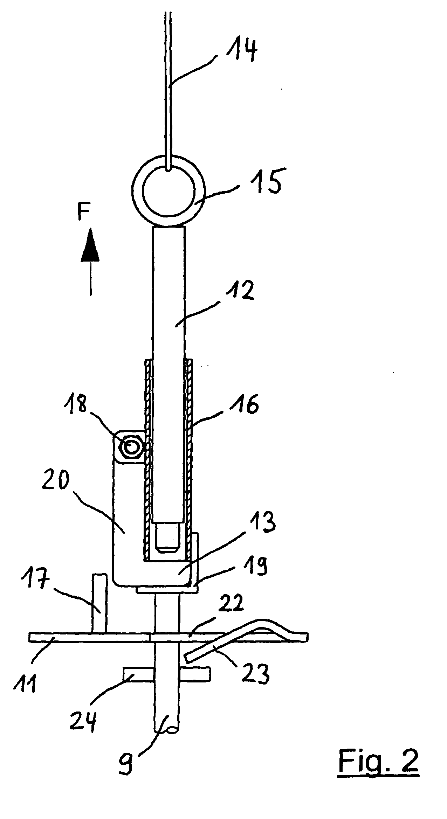

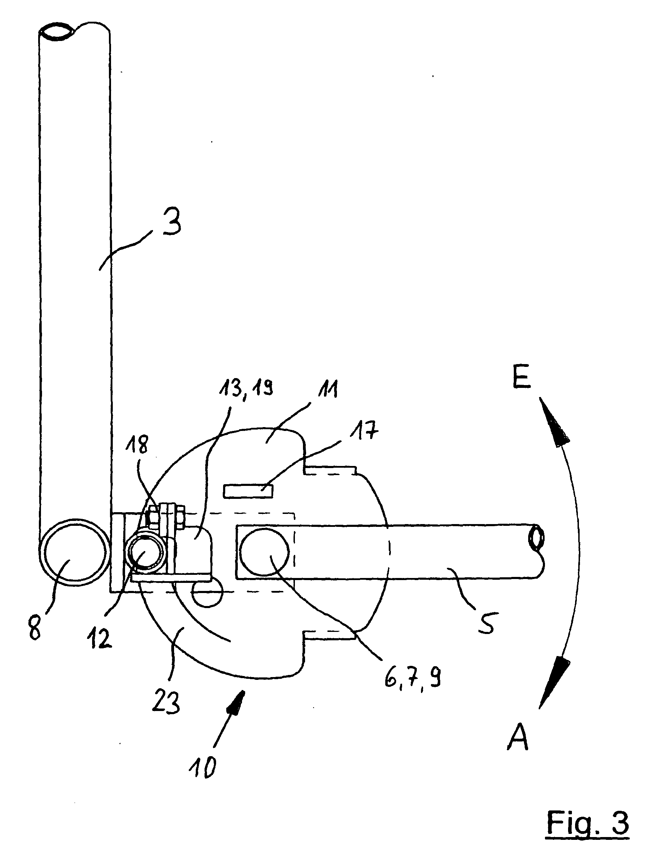

Die Selbstfangbox 1 weist zumindest eine Tür 5 auf, die hier als eingangseitige Tür ausgebildet ist. Am eingangsseitigen Ende der Selbstfangbox 1 im Ausführungsbeispiel der Figur 1 ist also die Eingangstür 5 vorgesehen, die ebenfalls insbesondere gitterartig ausgeführt sein kann. Die Eingangstür 5 ist an zwei Scharnieren 6, 7 an einem Stützelement 8, wie einem Pfosten, verschwenkbar befestigt. Dabei kann die Achse von dem einen, unteren Scharnier zum oberen, anderen Scharnier etwas geneigt ausgeführt sein, so dass in diesem Ausführungsbeispiel die Schwerkraft dazu führt, dass die Tür sich selbsttätig in die Mittellage einstellt. Das Scharnier 7 wird gebildet durch das Lager 24 und die Achse 9, siehe beispielsweise auch die Figuren 2 und 3.

Weiter weist die Eingangstür 5 eine Verriegelungsvorrichtung 10 auf, die es bewirken kann, dass sich die Eingangstür 5 abhängig von einer von außen durch Einstellung eines Fangriegels vorgenommenen Vorgabe einer Zugangsregel nach dem Öffnen der Eingangstür anschließend bei einem Zurückfallen in die Mittelstellung selbst für einen weiteren Zutritt verriegelt.

Die Figuren 2 und 3 zeigen die Verriegelungsvorrichtung 10 jeweils in einer vergrößerten Darstellung. Die Verriegelungsvorrichtung 10 weist dabei einem Fangriegel 12 auf, der als Bolzen oder Schieber in einem Riegellager 16 oder einer Führung axial beweglich geführt ist. Der Fangriegel 12 ist im Ausführungsbeispiel der Figuren 2 und 3 als Bolzen mit einer endseitig angebrachten Öse 15 ausgebildet. Als Riegellager 16 dient eine im Wesentlichen umfangsseitig geschlossene Führung, wie beispielsweise ein Rohrabschnitt. Der Fangriegel 12 ist in dem Riegellager axial verschiebbar aufgenommen, wobei der Fangriegel 12 des Ausführungsbeispiels der Figuren 2 und 3 durch ein Seil anhebbar oder absenkbar ist. Dabei stellt das Seil ein Einstellmittel 14 dar, das alternativ auch als Gestänge oder Kette ausgebildet sein kann.

Der Fangriegel 12 wird durch eine Sperre 13 in einer Ausgangslage gehalten. Die Sperre 13 ist dabei als ein um eine Gelenkachse 18 verschwenkbarer Arm 20 ausgebildet, an dem endseitig eine Sperrplatte 19 vorgesehen ist, die sich unter das untere Ende des Riegellagers 16 schieben bzw. verschwenken kann. In diesem Zustand kann der Fangriegel 12 nur bis maximal auf die Sperrplatte 19 der Sperre 13 abgesenkt werden.

In diesem Zustand kann die Eingangstür 5 frei um die Achse 15 pendeln, wobei sie sich aufgrund einer Federkraft oder aufgrund der Schwerkraft in Mittelstellung einstellt. Sollte in diesem Zustand ein Tier die Tür passieren wollen, müsste die Tür nur gegen einen geringen Widerstand geöffnet werden. Anschließend würde sie wieder in ihre Ausgangsstellung zurück fallen.

Zur Verriegelung der Eingangstür 5 sind weiterhin an der Tür 5 eine Kulisse 11 und ein Mitnehmernocken 17 vorgesehen, welche anhand der weiteren Figuren erläutert werden.

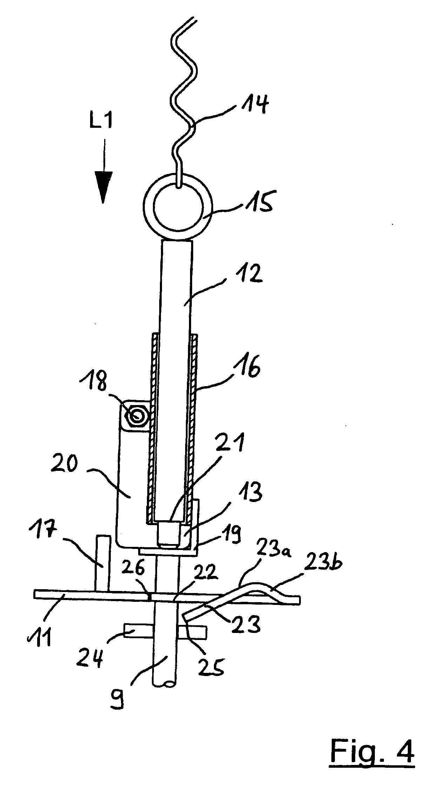

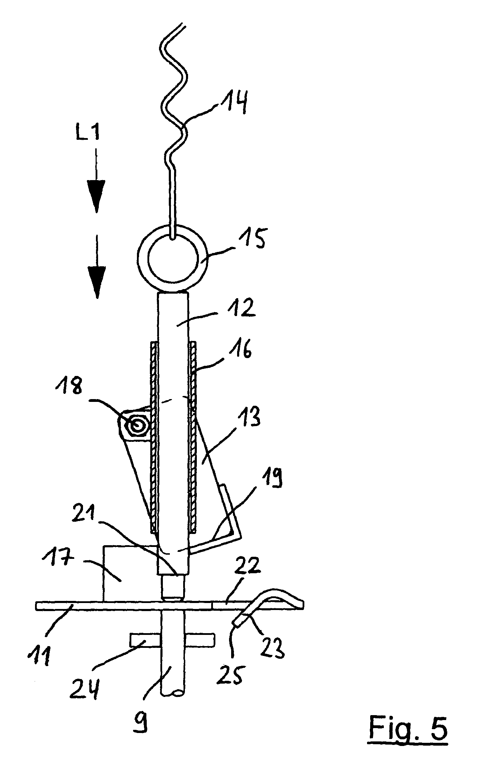

In den Figuren 4 und 5 ist die Verriegelungsvorrichtung 10 in einem weiteren Funktionszustand dargestellt, wobei im Vergleich zu den Figuren 2 und 3 nun das Seil 14 für die Zugangsregel des freien Wechselzutritts derart eingestellt bzw. abgelassen ist, dass der Fangriegel 12 abgesenkt ist und das untere Ende des Fangriegels 12 auf der Sperrplatte 19 der Sperre 13 aufliegt.

Wird nun die Eingangstür 5 durch ein in die Box 1 eintretendes Tier um einen vorgebbaren Winkel geöffnet, so verdrehen sich mit der Eingangstür 5 auch die mit der Eingangstür 5 verbundene Kulisse 11 und auch der mit der Kulisse 11 oder mit der Tür 5 verbundene Mitnehmernocken 17. Wenn der vorgebbare Winkel der Türöffnung überschritten ist, kommt der Mitnehmernocken 17 an der Sperre 13 bzw. an der Vorderkante der Sperrplatte 19 zur Anlage und bei weiterer Öffnung der Eingangstür 5 wird die Sperre 13 um die Achse 18 drehend nach hinten verkippt, so dass die Platte 19 auch nach hinten geschwenkt wird und den auf ihr ruhenden Fangriegel 12 nach unten frei gibt. Dies ist in den Figuren 4, 5 und 6 zu erkennen.

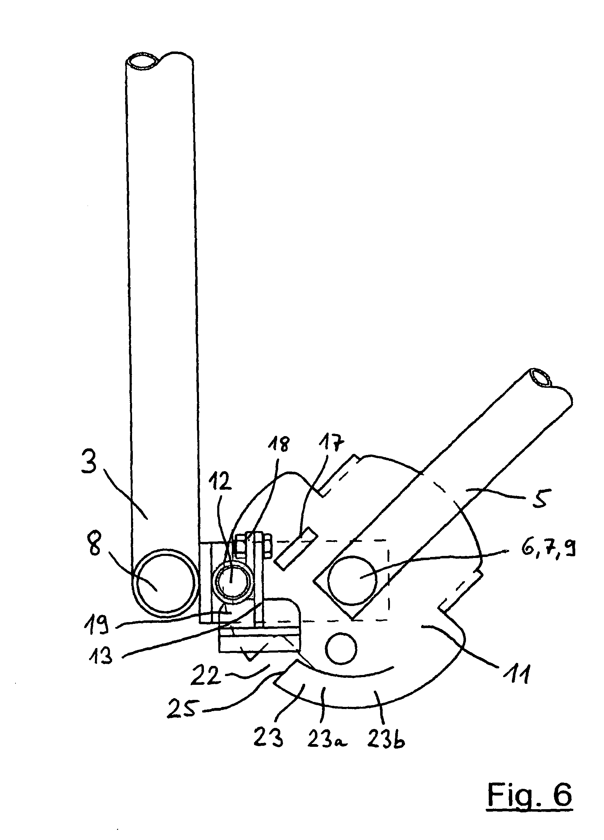

In den Figuren 5 und 6 ist die Eingangstür 5 um das Lager 9 um einen Öffnungswinkel in Eintrittschwenkrichtung (E) verdreht und somit geöffnet. Dabei ist die Kulisse 11 mit dem Mitnehmernocken 17, die mit der Tür 5 drehfest verbunden sind, ebenfalls um den Öffnungswinkel der Tür 5 gegenüber dem Fangriegel 12 und den Trennwänden verdreht. Der Mitnehmernocken 17 ist in Kontakt mit einer Anlagefläche der Sperre 13 oder der Sperrplatte 19 und hat diese nach hinten um die Achse 18 verschwenkt. Dabei wurde die Sperre 13 soweit nach hinten verschwenkt, dass die Platte 19 der Sperre 13 das untere Ende des Riegels 12 frei gibt, so dass der Riegel in der Führung 16 nach unten fällt und dann auf der Kulisse 11 aufliegt. In diesem Zustand kann die Eingangstür 5 noch weiter verschwenkt werden, wobei die Tür 5 sowohl noch weiter in Eintrittschwenkrichtung (E) als auch zur Mittelstellung zurück wieder in Richtung (A) bewegt werden kann.

Wird die Tür 5 aufgrund externer Kraft oder aufgrund einer Federkraft oder aufgrund der Schwerkraft wieder in die Mittelstellung verschwenkt, so wird die Tür 5 verriegelt, indem der Fangriegel 12 in die Ausnehmung 22 der Kulisse 11 fällt, zumindest so weit wie das Einstellmittel 14 dies zulässt. Dies ist in den nachfolgenden Figuren erläutert. Damit ist die Tür in Eintrittschwenkrichtung (E) verriegelt, indem der Riegelbolzen 12 an der Anschlagfläche 26 der Ausnehmung 22 zum Anschlag kommt. Es kann nun kein weiteres Tier mehr in die Box 1 gelangen und das bereits in der Box 1 befindliche Tier kann ungestört fressen.

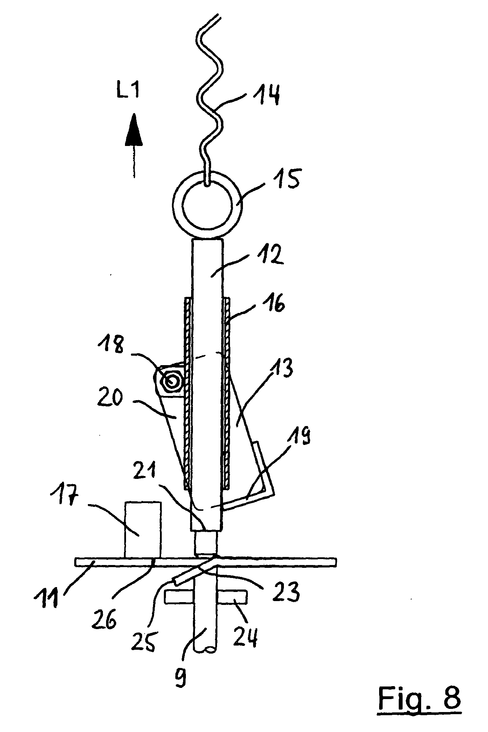

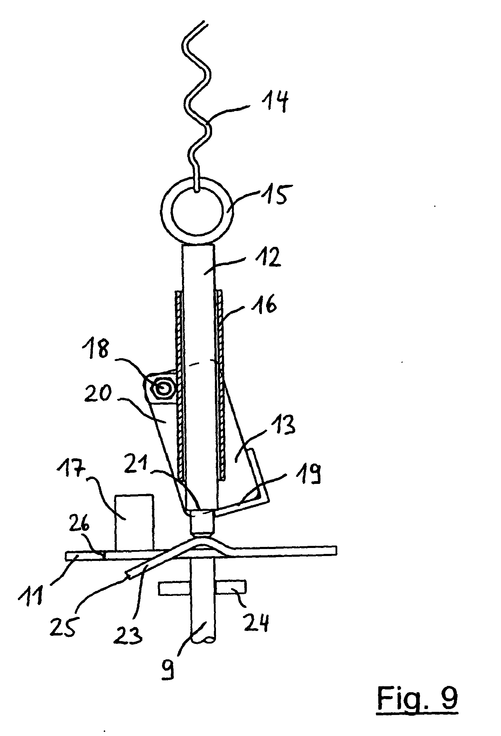

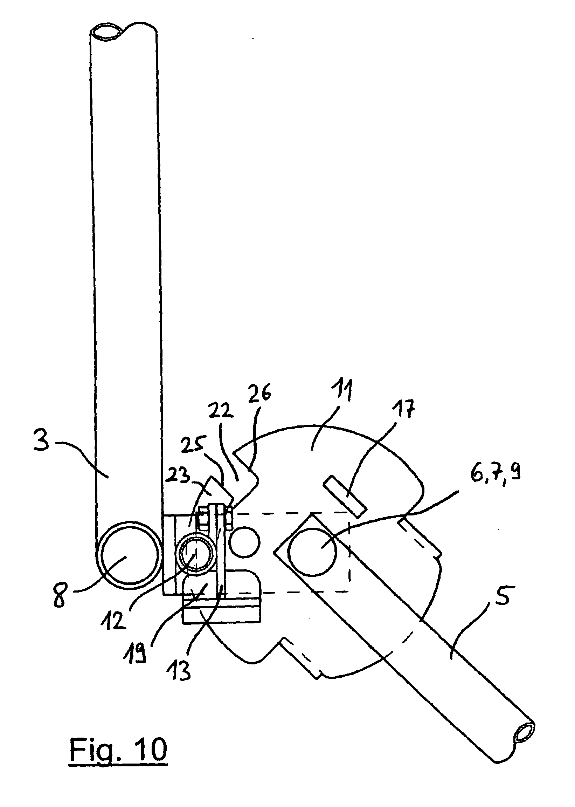

Die Figuren 8, 9 und 10 zeigen jeweils eine Darstellung der Eingangstür 5 im Zustand des Austritts eines Tieres aus der Box. Die Figur 8 stellt dabei den Zustand des Austritts unter der Zugangsregel Einzelzutritt dar und die Figur 9 für die Zugangsregel des freien Wechselzutritts.

Drückt das Tier, welches sich in der Box befindet, die Tür von innen Austrittschwenkrichtung (A) auf, so kann der Fangriegel 12 auf die Auflaufschräge 23 auflaufen und durch das weitere Verschwenken der Tür in Richtung (A) aus der Ausnehmung 22 heraus auf die Kulisse 11 gleiten, indem er durch die Schräge in seiner Lagerung 16 nach oben bewegt wird. Die Voraussetzung hierfür ist, dass das Einstellmittel 14 derart eingestellt wurde, dass der Fangriegel zwar frei nach unten die Ausnehmung 22 eintauchen kann, aber höchstens bis zu der Eintauchtiefe, in der das untere Ende des Fangriegels 12 noch oberhalb der Anschlagkante 25 der Auflauffläche 23 bleibt. Diese Stellung ist in den Zeichnungen mit Losstellung L1 bezeichnet. Gleichzeitig muss das Einstellmittel 14 eine freie Bewegung des Fangriegels 12 nach oben ermöglichen, mindestens bis auf die Oberfläche der Kulisse 11. Dies ist in der Figur 8 dargestellt.

Wird hierbei nach dem Austritt des Tieres die Tür 5 wieder in ihre Mittellage zurückbewegt, so taucht der Fangriegel über die Schräge 23 wieder in die Ausnehmung 22 ein und die Tür 5 ist für einen weiteren Zutritt gesperrt. Der Zutritt zur Box kann nur von außen durch Bedienereingriff wieder freigegeben werden, indem der Fangriegel z.B. über das Einstellmittel 14 so weit angehoben wird, dass sich der Fangriegel 12 wieder auf die zurückgeschwenkte Sperrplatte 19 der Sperre 13 stellt. Diese Betriebsart stellt die Zugangsregel des geregelten Einzelzutritts dar.

Für die Zugangsregel des freien Wechselzutritts ist es erforderlich, dass die Eingangstür 5 nach dem Austritt eines Tieres aus der Box selbsttätig wieder frei ist für den Eintritt des nächsten Tieres. Dieses erreicht man dadurch, dass an die Auflaufschräge 23 über die Oberfläche der Kulisse 11 hinaus eine weitere Auflaufschräge 23a angeschlossen wird, welche den Fangriegel noch weiter nach oben schieben kann.

Am Fangriegel 12 wird beispielsweise ein Absatz angedreht, sodass eine Anschlagkante 21 an dem bolzenförmigen Riegel entsteht. Verlässt ein Tier die Box, schiebt sich erst die Auflaufschräge 23 und anschließend die Auflaufschräge 23a unter den Fangriegel 12 und hebt diesen über die Ebene der Kulisse hinaus an, bis die Sperre 13, die durch Schwerkraft (oder Federkraft) in Richtung unter den Fangriegel schwenken will, sich hinter den angedrehten Zwischenabsatz 21 des Fangriegels setzt und damit die Verriegelungsvorrichtung in eine Ausgangsposition analog zur Ausgangsposition in Fig. 4 versetzt. Die Sperre 13 hält den Fangriegel in einer oberen Stellung fest, so dass er nicht in die Ausnehmung 22 der Kulisse 11 einrasten kann. Bei weiterem Schwenken der Tür in Richtung Austritt (A) gleitet der Fangriegel über die Schräge 23b auf die Kulisse zurück. Diese Schräge 23b ermöglicht auch das Zurückschwenken der Tür 5 in ihre Mittellage.

Erst wenn die Tür 5 durch Eintritt eines Tieres erneut nach innen schwenkt, wird vom Mitnehmernocken 17 die Sperre 13 zurückgeschoben, der Fangriegel 12 stellt sich wieder auf die Kulisse 11 und rastet dann in die Ausnehmung 22 ein, sobald die Tür nach dem Zutritt wieder ihre Ausgangsstellung erreicht hat.

So ist für die Zugangsregel des freien Wechselzutritts gesichert, dass einerseits eine belegte Box nicht von einem weiteren Tier betreten werden kann, andererseits jedoch eine leere Box auch ohne Tätigkeit einer Bedienungsperson für ein beliebiges Tier wieder zugänglich ist.

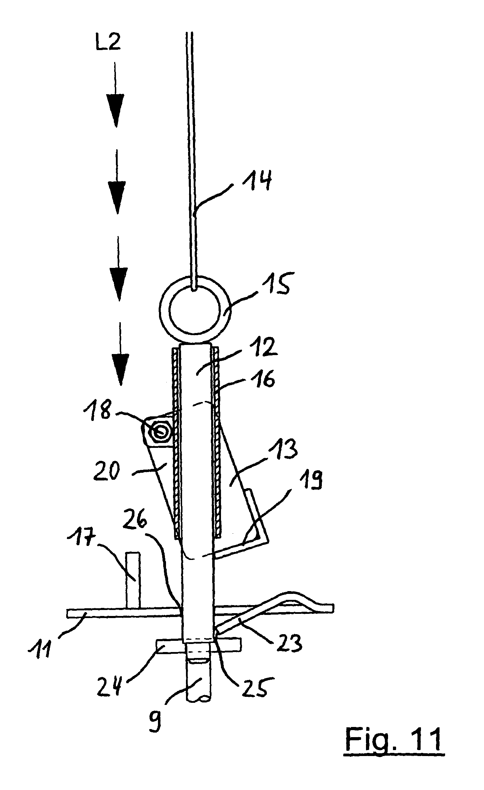

Figur 11 zeigt die erfindungsgemäße Verriegelungsvorrichtung für die Zugangsregel des gesperrten Zutritts und gleichzeitig gesperrten Austritts. Mit dieser Zugangsregel kann ein in der Selbstfangbox befindliches Tier dort auch eingesperrt bleiben und kein weiteres Tier kann in die Box gelangen, oder eine leere Box kann vollständig für den Zutritt gesperrt werden. Dazu wird das Einstellmittel 14 in eine Losstellung L2 gebracht, die es ermöglicht, das der Fangriegel 12 in der Ausnehmung 22 soweit eintauchen kann, dass sein unteres Ende sich unterhalb der Anschlagkante 25 der Auflaufschräge 23 befindet. In diesem Zustand ist das Schwenken der Tür in Richtung Eintritt (E) durch die Anlage des Fangriegels 12 an der Anschlagfläche 26 der Ausnehmung 22 blockiert und in Richtung (A) ist das Schwenken der Tür 5 durch die Anlage des Fangriegels 12 an der Anschlagkante 25 der Auflaufschräge 23 blockiert, weil der Fangriegel nicht auf die Schräge aufgleiten kann.

Diese Komplettverriegelung kann durch den Bediener nur durch das Anheben des Fangriegels 12 entweder von Hand oder über das Einstellmittel 14 aufgehoben werden.

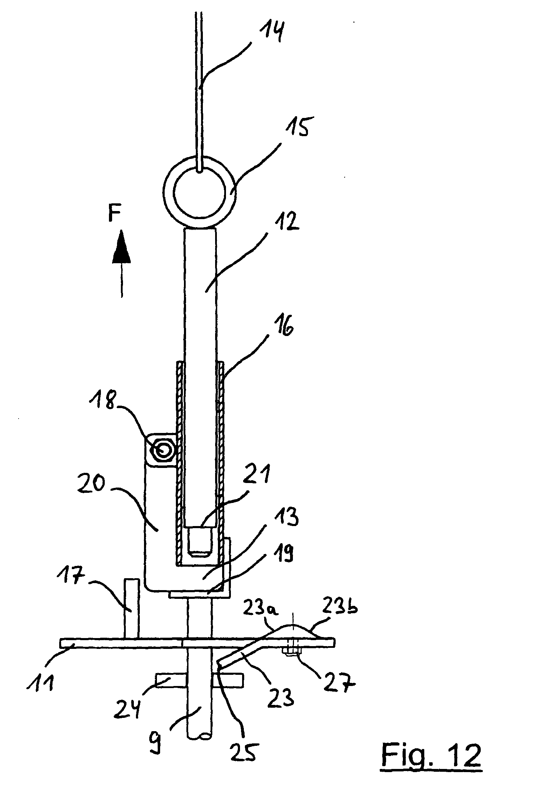

Figur 12 zeigt auch ein weiteres Ausführungsbeispiel für die sich an die Auflaufschräge 23 anschließenden Auflaufschrägen 23a und 23b. Gestaltet man diese Laufflächen für den Fangriegel derart, dass sie aus der Laufbahn des Fangriegels entfernt werden können, beispielsweise durch Verschieben, Verschwenken oder Demontieren des zugehörigen Bauteils, so kann bei Bedarf zwischen der Zugangsregel gesteuerter Einzelzutritt und freier Wechselzutritt umgebaut oder umgeschaltet werden.

Die sehr einfache und robuste Verriegelungseinrichtung und ihre flexible und einfach zu handhabende Bedienung eignet sich hervorragend auch für eine automatische Zugangsregelung zu den Boxen mit Tiererkennung, da alle Zugangsregelungen mit nur drei Stellungen F, L1 und L2 des Einstellmittels realisierbar sind. Zudem lassen sich so einfache, robuste und störungsunempfindliche Einstellmittel, wie die beschrieben Zugseile, auch in größeren Anlagen flexibel kombinieren und bedienen. Auch ist die korrekte Funktion auf einfachste Weise überprüfbar. Die Verriegelungsvorrichtung ist außerdem im Schadensfall einfach reparierbar sowie bei Ausfall einer Automatik von Hand dementsprechend leicht steuerbar.

### Bezugszeichenliste:

| Zeichen | Bezeichnung |
|---|---|
| 1 | Selbstfangbox |
| 2 | Futtertrog |
| 3 | Wandelement |
| 4 | Querstrebe |
| 5 | Tür |
| 6 | Scharnier unten |
| 7 | Scharnier oben |
| 8 | Türpfosten |
| 9 | Scharnierachse |
| 10 | Verriegelungsvorrichtung |
| 11 | Kulissenplatte |
| 12 | Fangriegel |
| 13 | Sperre |
| 14 | Einstellmittel |
| 15 | Öse |
| 16 | Riegellager |
| 17 | Mitnehmernocken |
| 18 | Gelenkachse |
| 19 | Sperrplatte |
| 20 | Sperrarm |
| 21 | zweite Sperrkante von Fangriegel 12 |
| 22 | Ausnehmung der Kulissenplatte |
| 23 | Auflaufschrägen der Kulissenplatte |
| 24 | Scharnierlager |
| 25 | Anschlagfläche der Auflaufschräge 23 |
| 26 | Anschlagfläche der Ausnehmung 22 |
| 27 | Befestigung der Auflaufschrägen 23 a und b |

## Patentansprüche

1. Tür (5), wie insbesondere Eingangstür einer Selbstfangbox für Tiere, wobei die Tür (5) verschwenkbar ist und eine Verriegelungsvorrichtung (10) aufweist, wobei
- die Verriegelungsvorrichtung (10) einen in einem Riegellager (16) beweglich gehaltenen Fangriegel (12) und eine Sperre (13) aufweist, welche den Fangriegel (12) festhält,
- an der Tür (5) eine Kulisse (11) und ein Mitnehmernocken (17) vorgesehen ist, der bei Verschwenkung der Tür (5) die Sperre (13) betätigt, derart, dass die Sperre (13) den Fangriegel (12) freigibt,
- die Kulisse (11) eine fallenartige Vertiefung oder Ausnehmung (22) aufweist, in welcher der Fangriegel (12) zur Verriegelung der Tür (5) aufnehmbar ist, und
- die Kulisse (11) im Bereich der Ausnehmung (22) eine oder mehrere Auflaufschrägen (23) aufweist, auf die der Fangriegel (12) auflaufen kann und dabei in seinem Riegellager (16) verlagert wird.

2. Tür nach Anspruch 1, **dadurch gekennzeichnet, dass** eine Auflaufschräge (23) sich aus der Ausnehmung heraus in Austrittschwenkrichtung (A) der Tür (5) bis zur Ebene der Oberfläche der Kulisse (11) erstreckt.

3. Tür nach Anspruch 2, **dadurch gekennzeichnet, dass** die Auflaufschräge (23) innerhalb der Ausnehmung (22) eine Anschlagfläche (25) besitzt.

4. Tür nach Anspruch 3, **dadurch gekennzeichnet, dass** eine weitere Auflaufschräge (23a) sich an die Schräge (23) in Austrittschwenkrichtung (A) der Tür (5) bis über die Ebene der Kulissenoberfläche hinaus anschließt und sich daran eine Laufschräge (23b) zurück bis zur Oberfläche der Kulisse (11) anschließt.

5. Tür nach Anspruch 4, **dadurch gekennzeichnet, dass** die über die Ebene der Oberfläche der Kulisse hinausragenden Auflaufschrägen (23a, 23b) aus der Laufbahn des Fangriegels (12) entfernbar sind.

6. Tür nach einem der Ansprüche 1 bis 5, **dadurch gekennzeichnet, dass** die Tür (5) mittels Federeinrichtungen selbsttätig in eine bestimmte Ausgangslage zurückführbar ist.

7. Tür nach einem der Ansprüche 1 bis 5, **dadurch gekennzeichnet, dass** die Tür (5) mit einer Scharnierachse (9) ausgestattet ist, die schräg zur Vertikalen geneigt ist, um die Tür (5) selbsttätig in eine bestimmte Ausgangslage zurückzuführen.

8. Tür nach einem der vorhergehenden Ansprüche, **dadurch gekennzeichnet, dass** die Verriegelungsvorrichtung (10) im Bereich eines Scharniers (6, 7) der Tür (5) angeordnet ist.

9. Tür nach einem der vorhergehenden Ansprüche, **dadurch gekennzeichnet, dass** die Bewegung des Fangriegels (12) in Richtung der Ausnehmung (22) der Kulisse (11) mittels eines Einstellmittels (14) in verschiedene Eintauchtiefen begrenzbar ist.

10. Tür nach Anspruch 9, **dadurch gekennzeichnet, dass** die Bewegung des Fangriegels (12) in Richtung der Ausnehmung (22) der Kulisse (11) in drei Eintauchtiefen begrenzbar ist.

11. Tür nach Anspruch 9 oder 10, **dadurch gekennzeichnet, dass** der Riegelbolzen (12) durch das Einstellmittel (14) in seiner Bewegung aus der Ausnehmung (22) heraus zumindest bis zur Überwindung der Auflaufschräge (23, 23a) nicht gehemmt wird.

12. Tür nach einem der Ansprüche 9 bis 11, **dadurch gekennzeichnet, dass** der Riegelbolzen (12) durch das Einstellmittel (14) aus der Ausnehmung (22) herausbewegbar ist.

13. Selbstfangbox (1) mit zumindest einem seitlichen Wandelement (3) und zumindest einer Tür (5), wie insbesondere Eingangstür, wobei die Tür (5) nach zumindest einem der Ansprüche 1 bis 12 ausgeführt ist.

14. Anordnung einer Mehrzahl von Selbstfangboxen nach Anspruch 13, **dadurch gekennzeichnet, dass** die Einstellmittel (14) einzelner oder aller Selbstfangboxen (1) koppelbar und/oder entkoppelbar sind und so gemeinsam und/oder individuell betätigbar sind.

## Claims

1. A door (5), such as in particular an entrance door of a self-trapping box for animals, wherein the door (5) is pivotable and encompasses a locking device (10), wherein
- the locking device (10) encompasses a security bolt (12), which is held in a bolt support (16) so as to be movable, and a latch (13), which retains the security bolt (12),
- provision is made on the door (5) for a connecting member (11) and a driving cam (17), which actuates the latch (13) in response to the pivoting of the door (5) such that the latch (13) releases the security bolt (12),
- the connecting member (11) encompasses a trap-like depression or recess (22), in which the security bolt (12) can be accommodated for locking the door (5), and
- the connecting member (11), in the area of the recess (22), encompasses one or a plurality of inclined contact surfaces (23), onto which the security bolt (12) can run and is thus displaced in its bolt support (16).

2. The door according to claim 1, **characterized in that** an inclined contact surface (23) extends out of the recess in exit pivot direction (A) of the door (5) up to the plane of the surface of the connecting member (11).

3. The door according to claim 2, **characterized in that** the inclined contact surface (23) has a stop surface (25) within the recess (22).

4. The door according to claim 3, **characterized in that** a further inclined contact surface (23a) connects to the inclined surface (23) in exit pivot direction (A) of the door (5) beyond the plane of the connecting member surface and **in that** an inclined surface (23b) connects thereto back to the surface of the connecting member (11).

5. The door according to claim 4, **characterized in that** the inclined contact surfaces (23a, 23b), which project beyond the plane of the surface of the connecting member, can be removed from the path of the security bolt (12).

6. The door according to any one of claims 1 to 5, **characterized in that** the door (5) can automatically be guided back into a certain initial position by means of spring devices.

7. The door according to any one of claims 1 to 5, **characterized in that** the door (5) is equipped with a hinge axis (9), which is inclined to the vertical, so as to automatically return the door (5) into a certain initial position.

8. The door according to any one of the preceding claims, **characterized in that** the locking device (10) is arranged in the area of a hinge (6, 7) of the door (5).

9. The door according to any one of the preceding claims, **characterized in that** the movement of the security bolt (12) in the direction of the recess (22) of the connecting member (11) can be limited in different immersion depths by means of an adjusting means (14).

10. The door according to claim 9, **characterized in that** the movement of the security bolt (12) in the direction of the recess (22) of the connecting bar (11) can be limited in three immersion depths.

11. The door according to claim 9 or 10, **characterized in that** the movement of the security bolt (12) out of the recess (22) is not blocked by means of the adjusting means (14), at least until it overcomes the inclined contact surface (23, 23a).

12. The door according to any one of claims 9 to 11, **characterized in that** the security bolt (12) can be moved out of the recess (22) by means of the adjusting means (14).

13. A self-trapping box (1) comprising at least one lateral wall element (3) and at least one door (5), such as in particular an entrance door, wherein the door (5) is embodied according to at least one of claims 1 to 12.

14. An arrangement of a plurality of self-trapping boxes according to claim 13, **characterized in that** the adjusting means (14) of individual self-trapping boxes or of all self-trapping boxes (1) can be coupled and/or uncoupled and can thus be actuated together and/or individually.

## Revendications

1. Porte (5), comme notamment porte d'entrée d'une boîte de capture automatique pour animaux, dans laquelle la porte (5) est pivotante et présente un dispositif de verrouillage (10), dans laquelle
- le dispositif de verrouillage (10) présente un verrou de capture (12) maintenu mobile dans un palier de verrou (16) et un arrêt (13) qui immobilise le verrou de capture (12),
- une coulisse (11) et une came d'entraînement (17) qui actionne l'arrêt (13) lors du pivotement de la porte (5) de telle sorte que l'arrêt (13) libère le verrou de capture (12), sont prévues sur la porte (5),
- la coulisse (11) présente un renfoncement ou évidement de type piège (22) dans lequel le verrou de capture (12) peut être reçu pour le verrouillage de la porte (5), et
- la coulisse (11) présente dans la région de l'évidement (22) un ou plusieurs biseaux d'arrêt (23) sur lesquels le verrou de capture (12) peut s'arrêter et est ce faisant déplacé dans son palier de verrou (16).

2. Porte selon la revendication 1, **caractérisée en ce qu'**un biseau d'arrêt (23) s'étend hors de l'évidement dans la direction de pivotement de sortie (A) de la porte (5) jusqu'au plan de la surface de la coulisse (11).

3. Porte selon la revendication 2, **caractérisée en ce que** le biseau d'arrêt (23) possède une surface de butée (25) au sein de l'évidement (22).

4. Porte selon la revendication 3, **caractérisée en ce qu'**un autre biseau d'arrêt (23a) se raccorde au biseau (23) dans la direction de pivotement de sortie (A) de la porte (5) jusqu'au-dessus du plan de la surface de la coulisse et un biseau de roulement (23b) s'y raccorde en retour jusqu'à la surface de la coulisse (11).

5. Porte selon la revendication 4, **caractérisée en ce que** les biseaux d'arrêt (23a, 23b) dépassant au-dessus du plan de la surface de la coulisse peuvent être éloignés de la voie de roulement du verrou de capture (12).

6. Porte selon l'une quelconque des revendications 1 à 5, **caractérisée en ce que** la porte (5) peut être ramenée automatiquement dans une position de départ déterminée au moyen de dispositifs à ressort.

7. Porte selon l'une quelconque des revendications 1 à 5, **caractérisée en ce que** la porte (5) est équipée d'un axe de charnière (9) qui est incliné en biais par rapport à la verticale afin de ramener la porte (5) automatiquement dans une position de départ déterminée.

8. Porte selon l'une quelconque des revendications précédentes, **caractérisée en ce que** le dispositif de verrouillage (10) est disposé dans la région d'une charnière (6, 7) de la porte (5).

9. Porte selon l'une quelconque des revendications précédentes, **caractérisée en ce que** le mouvement du verrou de capture (12) en direction de l'évidement (22) de la coulisse (11) peut être limité au moyen d'un moyen de réglage (14) dans différentes profondeurs d'insertion.

10. Porte selon la revendication 9, **caractérisée en ce que** le mouvement du verrou de capture (12) en direction de l'évidement (22) de la coulisse (11) peut être limité dans trois profondeurs d'insertion.

11. Porte selon la revendication 9 ou 10, **caractérisée en ce que** le boulon de verrouillage (12) n'est pas bloqué par le moyen de réglage (14) dans son mouvement hors de l'évidement (22) au moins jusqu'à surmonter le biseau d'arrêt (23, 23a).

12. Porte selon l'une quelconque des revendications 9 à 11, **caractérisée en ce que** le boulon de verrouillage (12) peut être extrait de l'évidement (22) par le moyen de réglage (14).

13. Boîte de capture automatique (1) comprenant au moins un élément de paroi latéral (3) et au moins une porte (5), comme notamment une porte d'entrée, dans laquelle la porte (5) est réalisée selon au moins une des revendications 1à12.

14. Agencement d'une pluralité de boîtes de capture automatique selon la revendication 13, **caractérisé en ce que** les moyens de réglage (14) peuvent être couplés et/ou découplés à des boîtes de capture automatique individuelles ou à toutes les boîtes de capture automatique (1) et peuvent ainsi être actionnés ensemble et/ou individuellement.
